# FASCICULE DE BREVET EUROPEEN

(11) **EP 2 807 460 B1**
(45) Date de publication et mention de la délivrance du brevet: **05.05.2021**
(21) Numéro de dépôt: 13705210.6
(22) Date de dépôt: 14.01.2013
(51) Int. Cl.: G01H 1/00

(54) **SYSTÈME D'ACQUISITION D'UN SIGNAL VIBRATOIRE D'UN MOTEUR ROTATIF**
SYSTEM ZUR ERFASSUNG VON DEM VIBRATORISCHEN SIGNAL EINES ROTIERENDEN MOTORS
SYSTEM TO ACQUIRE THE VIBRATION SIGNAL OF A ROTATING MOTOR

(30) Priorité: 24.01.2012 FR 1250661
(43) Date de publication de la demande: 03.12.2014
(73) Titulaire: Safran Aircraft Engines, 75015 Paris (FR)
(72) Inventeur: NICQ, Geoffroy, 77550 Moissy-Cramayel Cedex (FR)
(74) Mandataire: Brevalex
(86) Numéro de dépôt international: PCT/FR2013/050083
(87) Numéro de publication internationale: WO 2013/110878

(56) Documents cités:
- FR-A1- 2 941 049
- US-A- 5 471 880
- US-A1- 2009 164 142
- US-B1- 6 389 887

## Description

### DOMAINE TECHNIQUE

La présente invention concerne le domaine des systèmes d'acquisition des signaux vibratoires d'un moteur et plus particulièrement, l'acquisition des signaux vibratoires pour un diagnostic embarqué d'un moteur.

### ÉTAT DE LA TECHNIQUE ANTÉRIEURE

Un moteur rotatif est soumis à des contraintes mécaniques qui peuvent engendrer l'usure de ses éléments rotatifs. Une manière efficace de surveiller l'usure ou l'état d'un moteur et de mesurer les vibrations du moteur.

Plus particulièrement, dans le cas d'un moteur d'aéronef, ce dernier comporte des capteurs de vibration du type accéléromètre pour détecter les vibrations émises par le moteur. Les signaux vibratoires recueillis sont ensuite analysés pour détecter des anomalies ou des défauts d'un ou de plusieurs composants rotatifs. Cette analyse comporte une analyse fréquentielle des signaux détectés par les capteurs de vibration.

Actuellement, l'analyse vibratoire requiert des opérations d'échantillonnage du signal à une fréquence constante unique très élevée et des opérations de sur-échantillonnage du signal à des fréquences proportionnelles aux harmoniques à analyser et à leurs harmoniques multiples. De plus, il est nécessaire d'appliquer des filtres passe bande suiveurs très étroits préprogrammés pour chaque rapport d'harmoniques et pilotés par les indicateurs de vitesse de rotation du moteur.

Les opérations de ré-échantillonnage indispensables au filtrage des harmoniques nécessitent d'effectuer des interpolations qui sont très coûteuses en taille de calculs et qui doivent se faire sur un très grand nombre de points. De plus, afin d'assurer une précision suffisante sur les valeurs des signaux filtrés interpolés, il est important d'effectuer des acquisitions à très haute fréquence.

Au final, les signaux interpolés sont sur-échantillonnés et impliquent d'effectuer des transformées de Fourier sur un nombre de points très important. En outre, les opérations de filtrage imposent des analyses fréquentielles sur toute la largeur

Ainsi, les capacités de calcul de l'électronique embarquée sont fortement monopolisées par toutes ces opérations.

L'objet de la présente invention est par conséquent de proposer un système et un procédé d'acquisition en temps réel d'un signal vibratoire sans présenter les inconvénients précités et en particulier, en mettant en oeuvre des calculs simplifiés requérant des moyens électroniques diminués.

### EXPOSÉ DE L'INVENTION

La présente invention est définie par un système d'acquisition d'un signal vibratoire pour un diagnostic d'un moteur rotatif selon la revendication 1.

Ainsi, en échantillonnant directement le signal vibratoire à des fréquences proportionnelles à la rotation du moteur, ce système permet de minimiser le temps de calcul et le volume de stockage de données. Par exemple, dans le cas d'un moteur d'aéronef, le système d'acquisition peut ainsi être avantageusement utilisé pour un diagnostic embarqué du moteur sans monopoliser le temps de calcul ou l'espace mémoire d'un calculateur embarqué.

Ledit signal d'échantillonnage est paramétré par un rapport d'harmonique maximal prédéterminé et un rapport d'échantillonnage prédéterminé.

Ainsi, on peut prédéfinir l'harmonique maximal à extraire tout en simplifiant le traitement du signal vibratoire synchrone.

Selon une particularité de la présente invention, le système comporte un buffer pour buffériser un échantillon constitué d'un nombre prédéterminé de périodes dudit signal vibratoire synchrone, la longueur temporelle dudit buffer étant déterminée en fonction d'un rapport d'harmonique minimal.

La sélection d'un nombre réduit de points référencés par rapport à la rotation du moteur permet de n'occuper qu'un espace mémoire réduit tout en simplifiant l'extraction des signaux fréquentiels.

Avantageusement, le système comporte des moyens de calcul pour extraire, à partir dudit échantillon bufférisé, des signaux fréquentiels à des harmoniques multiples de l'harmonique minimale et de fréquences proportionnelles à la vitesse de rotation courante correspondante.

Ceci permet de directement extraire les harmoniques souhaitées sans recours à des techniques de ré-échantillonnage ou d'interpolation.

Avantageusement, les moyens de calcul sont configurés pour extraire lesdits signaux fréquentiels en multipliant ledit échantillon bufférisé avec des coefficients de Fourier des seules harmoniques à extraire.

Ainsi, on évite l'utilisation des coefficients de Fourier sur toute la bande d'analyse.

Selon un mode de réalisation préféré de la présente invention, les moyens d'entrée sont configurés pour recevoir des première et seconde vitesses de rotation courantes relatives respectivement à des premier et second arbres dudit moteur, et
les moyens d'échantillonnage sont configurés pour directement générer des premier et deuxième signaux vibratoires synchrones en échantillonnant en temps réel ledit signal vibratoire temporel avec respectivement, un premier signal d'échantillonnage synchronisé à ladite première vitesse de rotation courante, et un second signal d'échantillonnage synchronisé à ladite seconde vitesse de rotation courante.

Ceci permet dans le cas d'un moteur d'aéronef, de réduire le calcul embarqué quand on a des puissances de calcul limitées sur un calculateur embarqué sur le moteur ou sur l'aéronef.

Avantageusement, les moyens d'échantillonnage sont configurés pour directement générer un troisième signal vibratoire synchrone en échantillonnant en temps réel ledit signal vibratoire temporel avec un troisième signal d'échantillonnage synchronisé à la somme ou à la différence desdites première et seconde vitesses de rotation courantes, ledit troisième signal d'échantillonnage étant reconstitué à partir d'une combinaison trigonométrique desdits premier et deuxième signaux d'échantillonnage.

Ainsi, il suffit d'un simple calcul trigonométrique pour directement générer un signal vibratoire synchrone à la somme ou à la différence des vitesses de rotation.

Le système comporte des premier, deuxième, et troisième buffers pour buffériser respectivement, un premier échantillon constitué d'un nombre prédéterminé de périodes dudit premier signal vibratoire synchrone, un deuxième échantillon constitué d'un nombre prédéterminé de périodes dudit deuxième signal vibratoire synchrone, et un troisième échantillon constitué d'un nombre prédéterminé de périodes dudit troisième signal vibratoire synchrone, et en ce que les moyens de calcul sont configurés pour respectivement extraire à partir desdits premier, deuxième et troisième échantillons bufférisés, des premiers signaux fréquentiels à des fréquences proportionnelles à ladite première vitesse de rotation courante, des deuxièmes signaux fréquentiels à des fréquences proportionnelles à ladite seconde vitesse de rotation courante, et des troisièmes signaux fréquentiels à des fréquences proportionnelles à ladite somme ou différence desdites première et seconde vitesses de rotation courantes.

L'invention vise également un système de surveillance d'un moteur rotatif, comportant le système d'acquisition selon l'une quelconque des caractéristiques ci-dessus, et comportant en outre des moyens d'analyse pour analyser le(s) signal(signaux) fréquentiel(s) afin de diagnostiquer l'état du moteur.

L'invention vise aussi un procédé d'acquisition d'un signal vibratoire pour un diagnostic d'un moteur rotatif selon la revendication 9.

### BRÈVE DESCRIPTION DES DESSINS

D'autres caractéristiques et avantages de l'invention apparaîtront à la lecture de modes de réalisation préférentiels de l'invention faits en référence aux figures jointes parmi lesquelles :
La Fig. 1 illustre de manière schématique un système d'acquisition d'un signal vibratoire d'un moteur rotatif, selon l'invention ;
Les Figs. 2A-2B illustrent un exemple d'échantillonnage d'un signal vibratoire temporel et l'extraction des signaux fréquentiels, selon l'invention ;
La Fig. 3 illustre un système de surveillance pour un diagnostic embarqué de l'état d'un moteur d'aéronef, selon l'invention ;
La Fig. 4 illustre un algorithme d'acquisition et de traitement d'un signal vibratoire d'un moteur, selon l'invention ; et
La Fig. 5 illustre un logigramme par bloc d'acquisition et de traitement d'un signal vibratoire d'un moteur, selon l'invention.

### EXPOSÉ DÉTAILLÉ DE MODES DE RÉALISATION PARTICULIERS

Le concept à la base de l'invention repose sur l'acquisition des signaux de vibration à des fréquences directement synchronisées par les signaux de rotation du moteur.

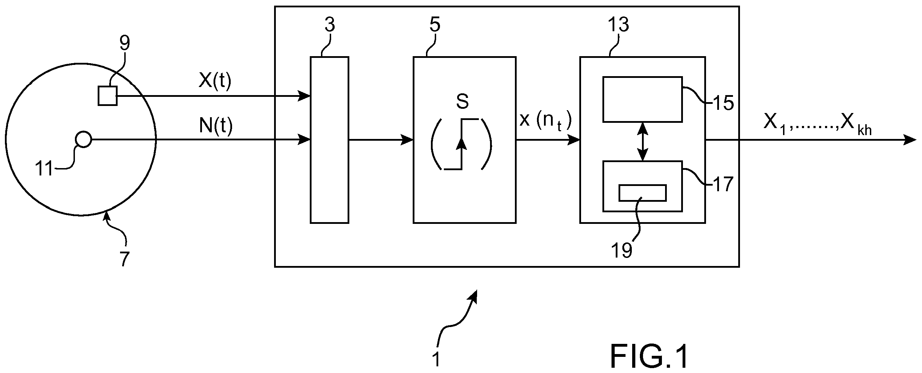

La Fig. 1 illustre de manière schématique un système d'acquisition d'un signal vibratoire d'un moteur rotatif, selon l'invention.

Le système d'acquisition 1 comporte des moyens d'entrée 3 et des moyens d'échantillonnage 5.

Les moyens d'entrée 3 sont configurés pour recevoir un signal vibratoire temporel X(t) représentatif de l'état de fonctionnement du moteur 7. Le signal vibratoire est issu d'au moins un capteur de vibration 9 du type accéléromètre installé sur le moteur 7.

En outre, les moyens d'entrée 3 sont configurés pour recevoir au moins une vitesse de rotation courante N(t) d'au moins un arbre 11 du moteur 7. On notera que le moteur 7 peut comprendre deux ou plusieurs rotors comportant des arbres tournant à des vitesses différentes.

Les moyens d'échantillonnage 5 sont configurés pour échantillonner en temps réel le signal vibratoire temporel X(t) avec un signal d'échantillonnage synchronisé à la vitesse de rotation courante N(t) générant ainsi un signal vibratoire synchrone x(nₜ) correspondant.

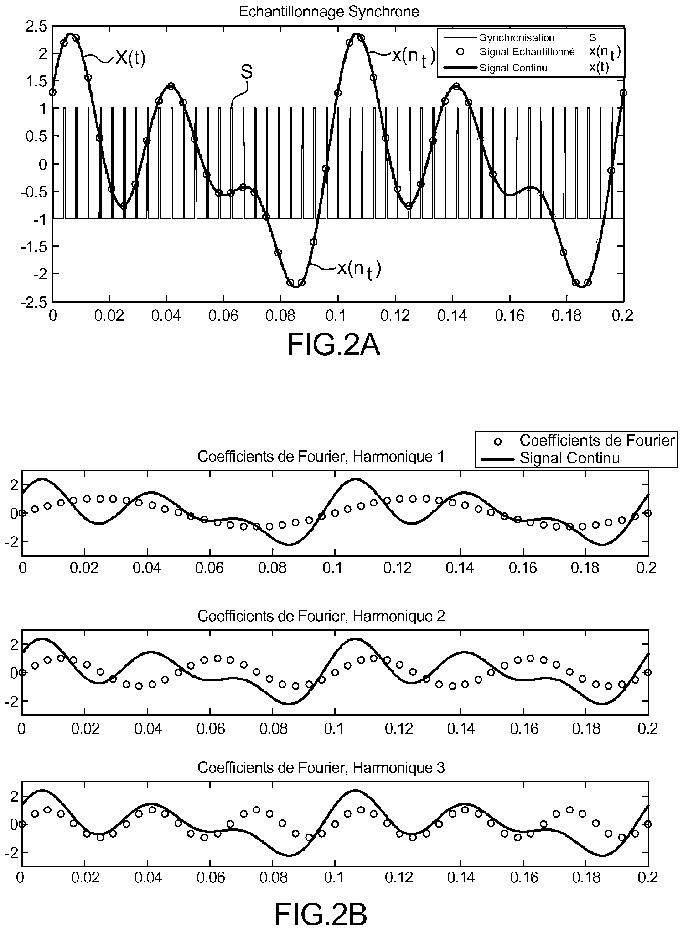

La Fig. 2A illustre un exemple d'échantillonnage d'un signal vibratoire temporel selon l'invention.

Le signal vibratoire temporel X(t) est un signal continu dans le temps acquis par exemple à une fréquence de l'ordre de 250kHz.

Le signal d'échantillonnage S est un signal carré synchronisé à la vitesse de rotation N(t) du moteur 7. De plus, le signal d'échantillonnage S est paramétré par un rapport d'harmonique maximal prédéterminé kh et un rapport d'échantillonnage r prédéterminé. Ainsi, le signal d'échantillonnage S présente une fréquence *S_{f}* = r × *N* × *kh.* Autrement dit, la fréquence d'échantillonnage varie en temps réel avec la vitesse de rotation du moteur 7 et dépend de l'ordre maximal kh de l'harmonique à extraire et du nombre minimal de points par période souhaitée (par exemple, 6 à 8 points). Selon l'exemple de la Fig. 2A, l'harmonique maximal est trois (kh=3) et le rapport d'échantillonnage est huit (r=8).

A chaque front montant, le signal vibratoire temporel X(t) est échantillonné pour générer le signal vibratoire synchrone x(nₜ). Le signal x(nₜ) est alors un signal discret sous-échantillonné à une fréquence synchrone avec la vitesse de rotation N(t) du moteur 7.

Ainsi, le signal vibratoire temporel X(t) est directement transformé en un signal numérique x(nₜ) synchronisé avec la vitesse de rotation N(t) du moteur.

On utilise ensuite des moyens de traitement 13 pour appliquer une transformée de Fourier sur le signal vibratoire synchrone x(nₜ) afin d'extraire des signaux fréquentiels proportionnels à la vitesse de rotation N(t) du moteur 7.

Les moyens de traitement 13 peuvent être compris dans le système d'acquisition 1 comme illustré sur la Fig. 1. En variante, ils peuvent faire partie d'un autre système électronique (non représenté) en liaison avec le système d'acquisition 1.

Les moyens de traitement 13 comportent des moyens de calcul 15 et des moyens de stockage 17 comportant au moins un buffer 19. Les moyens de stockage 17 peuvent comprendre un programme d'ordinateur de code pour la mise en oeuvre du procédé d'acquisition selon l'invention.

Avantageusement, le buffer 19 est configuré pour buffériser un échantillon constitué d'un nombre prédéterminé de périodes du signal vibratoire synchrone x(nₜ). La longueur temporelle du buffer 19 est déterminée en fonction d'un rapport d'harmonique minimal. L'exemple de la Fig. 2A illustre un échantillon constitué de deux périodes du signal vibratoire synchrone x(nₜ) selon une harmonique minimale de période égale à 0,1 s. Ceci permet d'économiser l'espace mémoire car on a juste besoin de garder dans le buffer 19 qu'un nombre très réduit de points du signal vibratoire synchrone (par exemple, 8 points par harmonique).

Avantageusement, les moyens de calcul 15 sont configurés pour extraire des signaux fréquentiels X₁,...Xₖₕ en multipliant l'échantillon bufférisé point à point avec des coefficients de Fourier des seules harmoniques à extraire et non sur toute la bande d'analyse. Ces signaux fréquentiels X₁,...Xₖₕ présentent des harmoniques multiples de l'harmonique minimale et des fréquences proportionnelles à la vitesse de rotation N(t) correspondante (voir Fig. 2B).

La Fig. 2B illustre un exemple des parties réelles des coefficients de Fourier d'harmoniques 1, 2, et 3 appliquées à l'échantillon bufférisé représenté sur la Fig. 2A pour extraire trois signaux fréquentiels X₁₁, X₁₂, et X₁₃ d'ordres kh=1, kh=2 et kh=3 respectivement. Les parties imaginaires (non représentées) des coefficients de Fourier sont déphasées de π/2.

Ainsi, la présente invention permet d'extraire directement les composantes harmoniques à des fréquences multiples de la rotation du moteur en un nombre très réduit d'opérations, sans interpolations, et en ne gardant en mémoire qu'un nombre très réduit de points. Ceci permet d'amplement économiser le temps de calcul et l'espace mémoire.

On notera que le système et procédé d'acquisition s'appliquent à tout type de moteur rotatif. Dans le cas décrit ci-après, on s'intéressera plus particulièrement à l'acquisition d'un signal vibratoire pour un diagnostic embarqué d'un moteur d'aéronef.

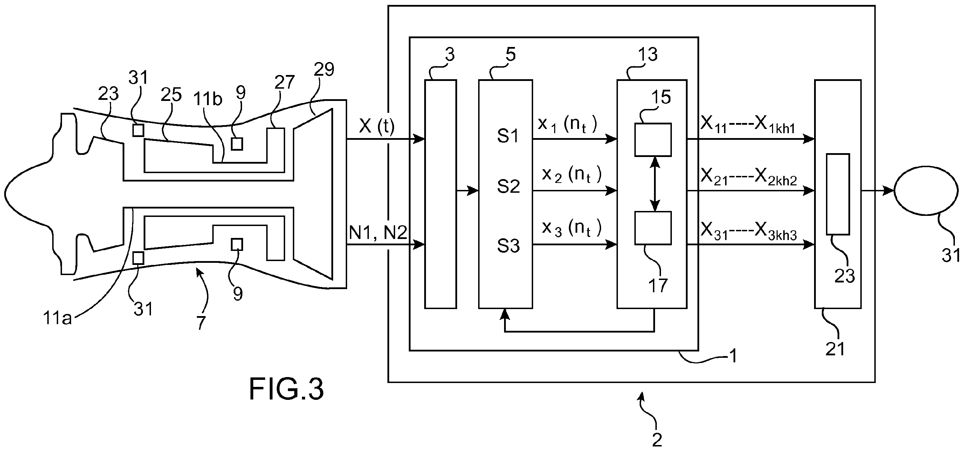

La Fig. 3 illustre un système de surveillance pour un diagnostic embarqué de l'état d'un moteur d'aéronef, selon l'invention.

Le système de surveillance 2 comporte un système d'acquisition 1 et un système de détection 21 d'anomalie.

Le moteur 7 d'aéronef comporte un compresseur à basse pression 23 en amont d'un compresseur à haute pression 25 ainsi qu'une turbine à haute pression 27 en amont d'une turbine à basse pression 29. Le compresseur 23 et la turbine 29 à basses pressions sont couplés par un premier arbre 11a de vitesse de rotation N₁. De même, le compresseur 25 et la turbine 27 à hautes pressions sont couplés par un second arbre 11b de vitesse de rotation N₂. Le second arbre 11b est un tube coaxial au premier arbre 11a et les deux arbres sont séparés par des roulements de paliers inter-arbres (non représentés). Les deux arbres 11a, 11b peuvent être contrarotatifs et les paliers présentent alors une vitesse de rotation N₁+N₂. En variante, les deux arbres peuvent être co-rotatifs et les paliers inter-arbres présentent alors une vitesse de rotation N1-N2.

Des capteurs de vibration 9 du type accéléromètre sont placés dans le moteur 7 pour détecter les vibrations émises par ce dernier. En outre, le moteur 7 comporte des censeurs 31 pour mesurer les première et seconde vitesses de rotation N₁, N₂ des premier et second arbres 11a, 11b respectivement.

Ainsi, pour bien diagnostiquer l'état du moteur 7 en fonctionnement, la présente invention propose d'extraire de manière directe et en temps réel trois groupes de signaux fréquentiels proportionnels respectivement aux vitesses de rotation N₁, N₂, et N₁+N₂ permettant de détecter en temps réel tout fonctionnement anormal d'un des composants du moteur 7.

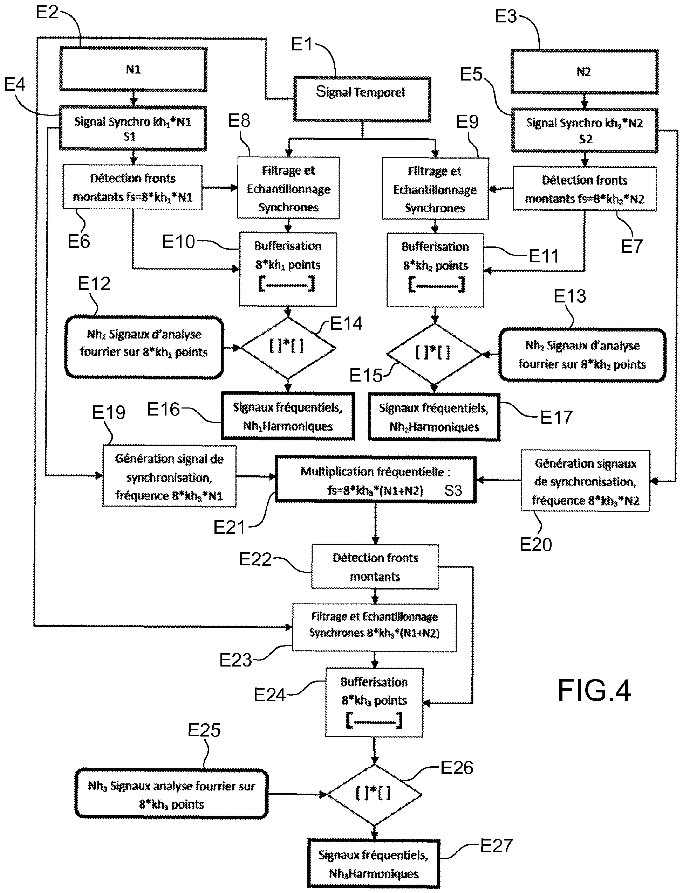

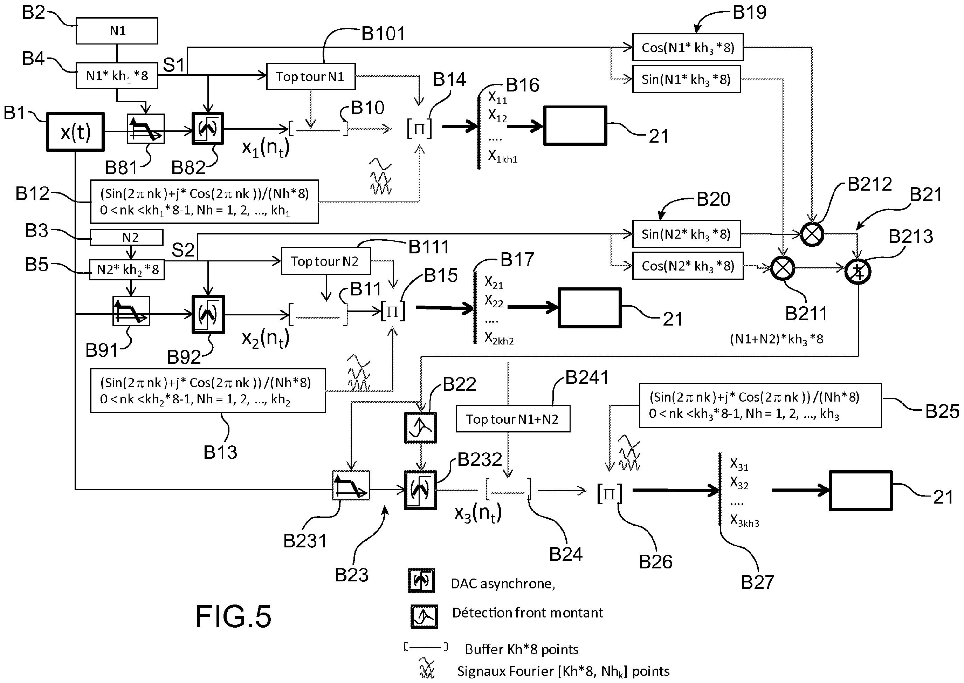

Les Figs. 4 et 5 illustrent respectivement, un algorithme et un logigramme par bloc d'acquisition et de traitement d'un signal vibratoire d'un moteur selon la Fig. 3.

Aux étapes E1-E3 (blocs B1-B3), les moyens d'entrée 3 reçoivent, lors d'une période prédéfinie de fonctionnement du moteur 7, un signal vibratoire temporel X(t) représentatif de l'état de fonctionnement du moteur et des première et seconde vitesses courantes N₁(t) et N₂(t) relatives respectivement, aux premier et second arbres 11a, 11b du moteur 7.

La période prédéfinie pendant laquelle sont obtenus le signal vibratoire temporel X(t) et les vitesses courantes N₁(t) et N₂(t) peut par exemple correspondre à une phase particulière de vol ou à un vol complet.

Aux étapes E4-E9 (blocs B4-B9), Les moyens d'échantillonnage 5 sont configurés pour directement générer des premier et deuxième signaux vibratoires synchrones x₁(nₜ) et x₂(nₜ) en échantillonnant en temps réel le signal vibratoire temporel X(t) avec respectivement, un premier signal d'échantillonnage S1 synchronisé à la première vitesse de rotation courante N₁(t), et un second signal d'échantillonnage S2 synchronisé à la seconde vitesse de rotation courante N₂(t).

Plus particulièrement, aux étapes E4 et E5 (blocs B4 et B5), les premier et deuxième signaux d'échantillonnages sont générés.

Le premier signal d'échantillonnage S1 présente une fréquence définie en fonction de la première vitesse N₁, d'un rapport harmonique maximal prédéterminé kh et d'un rapport d'échantillonnage r prédéterminé. A titre d'exemple, la fréquence du premier signal d'échantillonnage est *S*_{*f*1} = 8 × *N*₁ × *kh*₁*.* Le rapport d'échantillonnage est ici choisi égal à huit afin de faciliter les calculs de transformées de Fourier.

De même, le deuxième signal d'échantillonnage S2 est un signal dont la fréquence est définie en fonction de la seconde vitesse N₂, d'un rapport harmonique maximal prédéterminé kh₂ et d'un rapport d'échantillonnage r prédéterminé. A titre d'exemple, la fréquence du deuxième signal d'échantillonnage est *S*_{*f*2} = 8 × *N*₂ × *kh*₂*.*

Aux étapes E6 et E7, on détecte les fronts montants des premier et deuxième signaux d'échantillonnage S1, S2 afin de former des signaux carrés pour échantillonner le signal temporel de vibration X(t).

A l'étape E8 (blocs B81, B82), le signal temporel X(t) est d'abord filtré à l'aide d'un premier filtre passe bas B81 dont la fréquence de coupure est fonction de la fréquence maximale de l'harmonique kh₁ à extraire. En variante, le premier filtre passe bas B81 est piloté par le premier signal d'échantillonnage S1 dont la fréquence instantanée est proportionnelle à la première vitesse de rotation N1(t). Le filtrage du signal vibratoire X(t) à l'amont de l'échantillonnage permet d'éviter tout risque de repliement spectral.

Le signal vibratoire X(t) filtré précédemment est ensuite échantillonné par un premier convertisseur analogique-numérique DAC asynchrone B82 selon chaque front montant du premier signal d'échantillonnage pour générer un premier signal vibratoire synchrone x₁(nₜ).

De même, à l'étape E9 (blocs B91, B92), le signal temporel X(t) est filtré à l'aide d'un deuxième filtre passe bas B92 dont la fréquence de coupure est fonction de la fréquence maximale de l'harmonique kh₂ à extraire, ou est piloté par le deuxième signal d'échantillonnage S2 dont la fréquence instantanée est proportionnelle à la seconde vitesse de rotation N2(t). Le signal vibratoire X(t) filtré est ensuite échantillonné par un deuxième DAC asynchrone B92 selon le deuxième signal d'échantillonnage S2 pour générer un deuxième signal vibratoire synchrone x₂(nₜ).

Les signaux x₁(nₜ) x₂(nₜ) sont des signaux discrets synchronisés respectivement avec les vitesses de rotation N₁ et N₂.

A l'étape E10 (blocs B10), un premier échantillon constitué d'un nombre prédéterminé de périodes du premier signal vibratoire synchrone x₁(nₜ) est bufférisé dans un premier buffer B10 dont la longueur temporel est déterminée en fonction du rapport d'harmonique minimal h₁.

De même, à l'étape E11 (blocs B11), un deuxième échantillon constitué d'un nombre prédéterminé de périodes du deuxième signal vibratoire synchrone x₂(nₜ) est bufférisé dans un deuxième buffer B11 dont la longueur temporelle est déterminée en fonction du rapport harmonique minimal h₂.

Les premier et second buffers B10, B11 sont respectivement déclenchés à chaque top tour des rotations N1 et N2 (blocs B101, B111). En effet, les calculs en aval des transformées de Fourier se font à des fréquences sous multiples du taux de rafraîchissement des buffers. Les fréquences d'exécution de ces calculs sont synchronisées aux vitesses de rotation des arbres du moteur.

Aux étapes E12-E17 (bloc B12-B17), les moyens de calcul vont extraire des premier et second groupes de signaux fréquentiels X₁₁,...X₁ₖₕ₁ et X₂₁,...X₂ₖₕ₂.

Plus particulièrement, à l'étape E12 (bloc B12) les moyens de calcul 15 génèrent des premiers coefficients de Fourier des seules harmoniques à extraire concernant la première vitesse de rotation N₁ : (sin(2*πnk*) + *j* cos(2*πnk*))/8 × *Nh,* l'incrément de l'analyse de Fourier nk vérifiant 0 < *nk < kh*₁ × 8 - 1 ; Nh est le numéro de l'harmonique calculé avec *Nh* = 1,2*, ..., kh*₁ et kh₁ est l'ordre maximal de l'harmonique à analyser pour la vitesse de rotation N₁.

A l'étape E13 (bloc B13) les moyens de calcul 15 génèrent des deuxièmes coefficients de Fourier des seules harmoniques à extraire concernant la seconde vitesse de rotation N₂ : (sin(2*πnk*) + *j* cos(2*πnk*))/8 × *Nh,* l'incrément de l'analyse de Fourier nk vérifiant 0 < *nk* < *kh*₂ × 8 - 1 ; Nh est le numéro de l'harmonique calculé avec *Nh* = 1,2, *...,kh*₂ et kh₂ est l'ordre maximal de l'harmonique à analyser pour la vitesse de rotation N₂.

A l'étape E14 (bloc B14), les premiers coefficients de Fourier sont multipliés de manière matricielle avec le premier échantillon du premier signal vibratoire synchrone x₁(nₜ) pour générer le premier groupe de signaux fréquentiels X₁₁,...X₁ₖₕ₁ (E16, B16).

A l'étape E15 (bloc B15), les deuxièmes coefficients de Fourier sont multipliés de manière matricielle avec le deuxième échantillon du deuxième signal vibratoire synchrone x₂(nₜ) pour générer le deuxième groupe de signaux fréquentiels X₂₁,...X₂ₖₕ₂ (E17, B17).

Aux étapes E19-E27 (blocs B19-B27), les moyens d'échantillonnage 5 sont en outre configurés pour directement générer un troisième signal vibratoire synchrone x₃(nₜ) en échantillonnant en temps réel le signal vibratoire temporel X(t) avec un troisième signal d'échantillonnage S3 synchronisé à la somme N₁+N₂ des première et seconde vitesses de rotation courantes.

Aux étapes E19-E21, le troisième signal d'échantillonnage S3 est reconstitué par les moyens de traitement 13 à partir d'une combinaison trigonométrique des premier et deuxième signaux d'échantillonnage S1, S2.

En effet, à l'étape E19 (bloc B19), on génère un premier signal intermédiaire de synchronisation dont la fréquence est définie en fonction de la première vitesse N₁ et d'un rapport harmonique maximal prédéterminé kh₃. En particulier, on génère à partir du premier signal d'échantillonnage (étape E4, bloc B4), un signal sinusoïdal en sinus et un signal sinusoïdal en cosinus de fréquence N1^{∗}kh₃^{∗}8 : sin(8 × *N*₁ × *kh*₃) et cos(8 × *N*₁ × *kh*₃)*.*

De même, à l'étape E20 (bloc B20), on génère un deuxième signal intermédiaire de synchronisation dont la fréquence est définie en fonction de la seconde vitesse N₂ et d'un rapport harmonique maximal prédéterminé kh₃. En particulier, on génère à partir du deuxième signal d'échantillonnage (étape E5, bloc B5), un signal sinusoïdal en sinus et un signal sinusoïdal en cosinus de fréquence N2^{∗}kh₃^{∗}8 : sin(8 × *N*₂ × *kh*₃) et cos(8 × *N*₂ × *kh*₃)*.*

A l'étape E21, on multiplie (B211, B212) d'une part le sin(8 x *N*₁ × *kh*₃) de l'étape E19 avec le cos(8 × N₂ × *kh*₃) de l'étape E20 et d'autre part, le cos(8 × *N*₁ × *kh*₃) de l'étape E19 avec le sin(8 × *N*₂ × *kh*₃) de l'étape E20 pour respectivement former les signaux sin(8 × *N*₁ × *kh*₃) x cos(8 × *N*₂ × *kh*₃) et cos(8 × *N*₁ × *kh*₃) × sin(8 × *N*₂ × *kh*₃)*.* Au bloc B213, on ajoute ces deux derniers signaux pour former un signal de la forme sin(8 × *kh*₃ × (*N*₁ + *N*₂))*.* A partir de ce dernier signal, on détermine un troisième signal d'échantillonnage S3 dont la fréquence est définie en fonction de la somme de la première vitesse N₁ et la seconde vitesse N₂ ainsi que d'un rapport harmonique maximal prédéterminé kh₃ et d'un rapport d'échantillonnage r prédéterminé (ici r=8).

On notera qu'au cas où les premier et second arbres du moteur 11a, 11b sont co-rotatifs, il suffit de remplacer l'addition du bloc B213 par une soustraction pour générer un signal d'échantillonnage dont la fréquence est définie en fonction de la différence entre la première vitesse N₁ et la seconde vitesse N₂.

A l'étape E22 (bloc B22), on extrait les fronts montants de ce troisième signal d'échantillonnage pour former un signal carré permettant d'échantillonner le signal temporel X(t).

En effet, à l'étape E23 (blocs B231, B232), le signal vibratoire temporel X(t) est d'abord filtré à l'aide d'un troisième filtre passe bas B231 dont la fréquence de coupure est fonction de la fréquence maximale de l'harmonique kh₃ à extraire. En variante, le troisième filtre passe bas B231 est piloté par le troisième signal d'échantillonnage S3. Le signal vibratoire X(t) filtré est ensuite échantillonné par un troisième DAC asynchrone B232 selon le troisième signal d'échantillonnage S3 pour générer un troisième signal vibratoire synchrone x₃(nₜ). Ainsi, le signal x₃(nₜ) est un signal discret synchronisé avec la vitesse de rotation N₁+N₂.

A l'étape E24 (blocs B24), un troisième échantillon constitué d'un nombre prédéterminé de périodes du troisième signal vibratoire synchrone x₃(nₜ) est bufférisé dans un troisième buffer B24 dont la longueur temporelle est déterminée en fonction du rapport d'harmonique minimal h₃. Le troisième buffer B24 est déclenché à chaque top tour de la rotation N1+N2 (bloc B241).

A l'étape E25 (bloc B25) les moyens de calcul 13 génèrent des troisièmes coefficients de Fourier des seules harmoniques à extraire concernant la vitesse de rotation N₁+N₂ : (sin(2*πnk*) + *j* cos(2*πnk*))/8 × *Nh,* l'incrément de l'analyse de Fourier nk vérifiant 0 < *nk < kh*₃ × 8 - 1 ; Nh est le numéro de l'harmonique calculé avec *Nh* = 1,2, *..., kh*₃ et kh₃ est l'ordre maximal de l'harmonique à analyser pour la vitesse de rotation N₁+N₂.

A l'étape E26 (bloc B26), les troisièmes coefficients de Fourier sont multipliés de manière matricielle avec le troisième échantillon du troisième signal vibratoire synchrone x₃(nₜ) pour générer un troisième groupe de signaux fréquentiels X₃₁,...X₃ₖₕ₃ (E27, B27).

Le système ou procédé selon l'invention n'utilise pas d'opérations de sous ou sur échantillonnage, et utilise des calculs de transformées de Fourier FFT simplifiés. En effet, on ne récupère que les signaux aux harmoniques pertinentes pour le diagnostic du moteur avec un minimum de calcul et de mémoire. De plus, on n'utilise pas de filtres suiveurs.

Ainsi, la performance requise de l'électronique embarquée (mémoire RAM, vitesse de calcul) est diminuée. De plus, la surchauffe induite est réduite et les plages de fonctionnement sont augmentées.

Par ailleurs, les premier, deuxième et troisième groupes de signaux fréquentiels permettent de diagnostiquer respectivement, le premier arbre, le deuxième arbre et les roulements de palier inter-arbres du moteur.

En effet, le système de détection 21 (voir Fig. 3) récupère en temps réel les premier, deuxième et troisième groupes de signaux fréquentiels pour les analyser. Le système de détection 21 comporte des moyens d'analyse 23 pour par exemple corréler les signaux fréquentiels avec d'autres signaux ou pour les comparer à des valeurs de seuil prédéfinies afin de surveiller en temps réel l'état du moteur 7. Le système de détection peut par exemple, suivre l'évolution en amplitude des différents harmoniques des signaux fréquentiels par rapport à des seuils relatifs correspondants. Un dépassement de seuil peut ainsi déclencher des alarmes ou des messages d'alerte 31.

En variante, l'analyse des signaux fréquentiels peut être réalisée en différé afin de minimiser davantage le temps de calcul pendant le vol.

Avantageusement, les premier, deuxième et troisième groupes de signaux fréquentiels peuvent être stockés de vol en vol dans une base de données pour analyser l'évolution dans le temps de l'état du moteur 7.

On notera que le système de surveillance peut être intégré dans un boîtier spécifique ou faire partie d'un boîtier électronique existant. Avantageusement, on peut exploiter les moyens d'acquisition et de traitement d'un calculateur embarqué dans l'aéronef ou dans un calculateur intégré dans le moteur d'aéronef de type EMU (Engine Monitoring Unit) pour exploiter le système d'acquisition de signaux de vibration et de diagnostic du moteur selon l'invention.

## Revendications

1. Système d'acquisition d'un signal vibratoire pour un diagnostic d'un moteur (7) rotatif, **caractérisé en ce qu'**il comporte :
des moyens d'entrée (3) pour recevoir un signal vibratoire temporel (X(t)) dudit moteur et au moins une vitesse de rotation courante N(t) d'au moins un arbre (11) dudit moteur, et
des moyens d'échantillonnage (5) pour échantillonner en temps réel ledit signal vibratoire temporel (X(t)) avec au moins un signal d'échantillonnage (S) synchronisé à ladite au moins une vitesse de rotation courante transformant ainsi directement le signal vibratoire temporel (X(t)) en un signal vibratoire synchrone (x(nₜ)) correspondant, ledit signal vibratoire synchrone (x(nₜ)) étant un signal numérique synchronisé avec la vitesse de rotation du moteur, ledit signal d'échantillonnage (S) étant paramétré par un rapport d'harmonique maximal kh prédéterminé et un rapport d'échantillonage r prédéterminé, le signal d'échantillonage (S) présentant une fréquence *S_{f}* telle que *S_{f}* = *r x N x kh.*

2. Système selon la revendication 1, **caractérisé en ce qu'**il comporte un buffer (19) pour buffériser un échantillon constitué d'un nombre prédéterminé de périodes dudit signal vibratoire synchrone, la longueur temporelle dudit buffer étant déterminée en fonction d'un rapport d'harmonique minimal.

3. Système selon la revendication 2, **caractérisé en ce qu'**il comporte des moyens de calcul (15) pour extraire, à partir dudit échantillon bufférisé, des signaux fréquentiels (X₁,...Xₖₕ) à des harmoniques multiples de l'harmonique minimale et de fréquences proportionnelles à la vitesse de rotation courante correspondante.

4. Système selon la revendication 3, **caractérisé en ce que** les moyens de calcul (15) sont configurés pour extraire lesdits signaux fréquentiels (X₁,...Xₖₕ) en multipliant ledit échantillon bufférisé avec des coefficients de Fourier des seules harmoniques à extraire.

5. Système selon l'une quelconque des revendications précédentes, **caractérisé en ce que** :
les moyens d'entrée (3) sont configurés pour recevoir des première et seconde vitesses de rotation courantes (N₁(t), N₂(t)) relatives respectivement à des premier et second arbres dudit moteur, et
les moyens d'échantillonnage (5 ; B82, B92) sont configurés pour directement générer des premier et deuxième signaux vibratoires synchrones (x₁(nₜ), x₂(nₜ)) en échantillonnant en temps réel ledit signal vibratoire temporel (X(t)) avec respectivement, un premier signal d'échantillonnage (S1) synchronisé à ladite première vitesse de rotation courante, et un second signal d'échantillonnage (S2) synchronisé à ladite seconde vitesse de rotation courante.

6. Système selon la revendication 5, **caractérisé en ce que** les moyens d'échantillonnage (5 ; B232) sont configurés pour directement générer un troisième signal vibratoire synchrone (x₃(nₜ)) en échantillonnant en temps réel ledit signal vibratoire temporel avec un troisième signal d'échantillonnage (S3) synchronisé à la somme ou à la différence desdites première et seconde vitesses de rotation courantes, ledit troisième signal d'échantillonnage étant reconstitué à partir d'une combinaison trigonométrique desdits premier et deuxième signaux d'échantillonnage.

7. Système selon la revendication 6, **caractérisé en ce qu'**il comporte des premier, deuxième, et troisième buffers (B10, B11, B24) pour buffériser respectivement, un premier échantillon constitué d'un nombre prédéterminé de périodes dudit premier signal vibratoire synchrone (x₁(nₜ)), un deuxième échantillon constitué d'un nombre prédéterminé de périodes dudit deuxième signal vibratoire synchrone (x₂(nₜ)), et un troisième échantillon constitué d'un nombre prédéterminé de périodes dudit troisième signal vibratoire synchrone (x₃(nₜ)), et **en ce que** les moyens de calcul sont configurés pour respectivement extraire à partir desdits premier, deuxième et troisième échantillons bufférisés, des premiers signaux fréquentiels (X₁₁,...X₁ₖₕ) à des fréquences proportionnelles à ladite première vitesse de rotation courante, des deuxièmes signaux fréquentiels (X₁₁,...X₁ₖₕ) à des fréquences proportionnelles à ladite seconde vitesse de rotation courante, et des troisièmes signaux fréquentiels (X₁₁,...X₁ₖₕ) à des fréquences proportionnelles à ladite somme ou différence desdites première et seconde vitesses de rotation courantes.

8. Système de surveillance d'un moteur rotatif, comportant le système d'acquisition selon l'une quelconque des revendications 1 à 7, **caractérisé en ce qu'**il comporte en outre des moyens d'analyse (23) pour analyser le(s) signal(signaux) fréquentiel(s) afin de diagnostiquer l'état du moteur.

9. Procédé d'acquisition d'un signal vibratoire pour un diagnostic d'un moteur rotatif, **caractérisé en ce qu'**il comporte les étapes suivantes :
recevoir un signal vibratoire temporel (X(t)) dudit moteur et au moins une vitesse de rotation courante N(t) d'au moins un arbre dudit moteur, et
échantillonner en temps réel ledit signal vibratoire temporel avec au moins un signal d'échantillonnage (S) synchronisé à ladite au moins une vitesse de rotation courante transformant directement le signal vibratoire temporel (X(t)) en un signal vibratoire synchrone (x(nₜ)) correspondant, ledit signal vibratoire synchrone (x(nₜ)) étant ainsi un signal numérique synchronisé avec la vitesse de rotation du moteur, ledit signal d'échantillonnage (S) étant paramétré par un rapport d'harmonique maximal *kh* prédéterminé et un rapport d'échantillonage *r* prédéterminé, le signal d'échantillonage (S) présentant une fréquence *S_{f}* telle que *S_{f}* = *r x N x kh.*

## Patentansprüche

1. System zur Erfassung eines Vibrationssignals für eine Diagnose eines Rotationsmotors (7), **dadurch gekennzeichnet, dass** es folgendes umfasst:
Eingabemittel (3) zum Aufnehmen eines zeitlichen Vibrationssignals (X(t)) des Motors und zumindest einer aktuellen Drehzahl N(t) von mindestens einer Welle (11) des Motors, sowie
Abtasteinrichtungen (5) zum Abtasten in Echtzeit des zeitlichen Vibrationssignals (X(t)) mit mindestens einem Abtastsignal (S), das mit der mindestens einen aktuellen Drehzahl synchronisiert ist, wodurch das zeitliche Vibrationssignal (X(t)) direkt in ein entsprechendes synchrones Vibrationssignal (x(nₜ)) umgewandelt wird, wobei das synchrone Vibrationssignal (x(nₜ)) ein digitales Signal ist, das mit der Drehzahl des Motors synchronisiert ist, wobei das Abtastsignal (S) durch ein vorgegebenes maximales Oberschwingungsverhältnis *kh* und ein vorgegebenes Abtastverhältnis r parametriert ist, wobei das Abtastsignal (S) eine derartige Frequenz *S_{f}* aufweist, dass *S_{f}* = *r x N x kh.*

2. System nach Anspruch 1, **dadurch gekennzeichnet, dass** es einen Puffer (19) zum Puffern eines Abtastwertes aufweist, der aus einer vorgegebenen Anzahl von Perioden des synchronen Vibrationssignals besteht, wobei die zeitliche Länge des Puffers in Abhängigkeit eines minimalen Oberschwingungsverhältnisses bestimmt wird.

3. System nach Anspruch 2, **dadurch gekennzeichnet, dass** es Berechnungseinrichtungen (15) umfasst, um aus dem gepufferten Abtastwert Frequenzsignale (X₁,...Xₖₕ) mit mehreren Oberschwingungen der minimalen Oberschwingung und Frequenzen, die proportional zur entsprechenden aktuellen Drehzahl sind, zu extrahieren.

4. System nach Anspruch 3, **dadurch gekennzeichnet, dass** die Berechnungseinrichtungen (15) dazu konfiguriert sind, die Frequenzsignale (X₁,...Xₖₕ) zu extrahieren, indem der gepufferte Abtastwert mit Fourier-Koeffizienten der zu extrahierenden einzelnen Oberschwingungen multipliziert wird.

5. System nach einem der vorhergehenden Ansprüche, **dadurch gekennzeichnet, dass**:
die Eingabemittel (3) dazu konfiguriert sind, die erste und die zweite aktuelle Drehzahl (N₁(t), N₂(t)) jeweils bezüglich der ersten und der zweiten Welle des Motors aufzunehmen, und
die Abtasteinrichtungen (5; B82, B92) dazu konfiguriert sind, erste und zweite synchrone Vibrationssignale (x₁(nₜ), x₂(nₜ)) direkt zu erzeugen, indem das zeitliche Vibrationssignal (X(t)) mit jeweils einem ersten Abtastsignal (S1), das mit der ersten aktuellen Drehzahl synchronisiert ist, und einem zweiten Abtastsignal (S2), das mit der zweiten aktuellen Drehzahl synchronisiert ist, in Echtzeit abgetastet wird.

6. System nach Anspruch 5, **dadurch gekennzeichnet, dass** die Abtasteinrichtungen (5; B232) dazu konfiguriert sind, direkt ein drittes synchrones Vibrationssignal (x₃(nₜ)) zu erzeugen, indem das zeitliche Vibrationssignal mit einem dritten Abtastsignal (S3), das mit der Summe oder mit der Differenz der ersten und der zweiten aktuellen Drehzahl synchronisiert ist, in Echtzeit abgetastet wird, wobei das dritte Abtastsignal ausgehend von einer trigonometrischen Kombination des ersten und des zweiten Abtastsignals wiederhergestellt wird.

7. System nach Anspruch 6, **dadurch gekennzeichnet, dass** es einen ersten, einen zweiten und einen dritten Puffer (B10, B11, B24) umfasst, um jeweils einen ersten, aus einer vorgegebenen Anzahl von Zeiträumen des ersten synchronen Vibrationssignals (x₁(nₜ)) gebildeten Abtastwert, einen zweiten, aus einer vorgegebenen Anzahl von Zeiträumen des zweiten synchronen Vibrationssignals x₂(nₜ)) gebildeten Abtastwert sowie einen dritten, aus einer vorgegebenen Anzahl von Zeiträumen des dritten synchronen Vibrationssignals (x₃(nₜ)) gebildeten Abtastwert zu puffern, und dass die Berechnungseinrichtungen dazu konfiguriert sind, ausgehend von dem ersten, dem zweiten und dem dritten gepufferten Abtastwert jeweils erste Frequenzsignale (X₁₁,...X₁ₖₕ) mit Frequenzen, die zu der ersten aktuellen Drehzahl proportional sind, zweite Frequenzsignale (X₁₁,...X₁ₖₕ) mit Frequenzen, die zu der zweiten aktuellen Drehzahl proportional sind, sowie dritte Frequenzsignale (X₁₁,... X₁ₖₕ) mit Frequenzen zu extrahieren, die zu der Summe oder Differenz der ersten und der zweiten aktuellen Drehzahl proportional sind.

8. System zur Überwachung eines Rotationsmotors, mit dem Erfassungssystem nach einem der Ansprüche 1 bis 7, **dadurch gekennzeichnet, dass** es außerdem Analyseeinrichtungen (23) zum Analysieren des Frequenzsignals/der Frequenzsignale aufweist, um den Zustand des Motors zu diagnostizieren.

9. Verfahren zur Erfassung eines Vibrationssignals für eine Diagnose eines Rotationsmotors, **dadurch gekennzeichnet, dass** es die folgenden Schritte aufweist:
Empfangen eines zeitlichen Vibrationssignals (X(t)) des Motors und zumindest einer aktuellen Drehzahl (N(t) von mindestens einer Welle des Motors, sowie
Abtasten in Echtzeit des zeitlichen Vibrationssignals mit mindestens einem Abtastsignal (S), das mit der mindestens einen aktuellen Drehzahl synchronisiert ist, wodurch das zeitliche Vibrationssignal (X(t)) direkt in ein entsprechendes synchrones Vibrationssignal (x(nₜ)) umgewandelt wird, wobei das synchrone Vibrationssignal (x(nₜ)) somit ein numerisches Signal ist, das mit der Drehzahl des Motors synchronisiert ist, wobei das Abtastsignal (S) durch ein vorgegebenes maximales Oberschwingungsverhältnis *kh* und ein vorgegebenes Abtastverhältnis r parametriert wird, wobei das Abtastsignal (S) eine derartige Frequenz *S_{f}* aufweist, dass *S_{f} = r x N x kh.*

## Claims

1. A system for acquiring a vibratory signal for diagnosing a rotary engine (7), **characterised in that** it includes:
input means (3) for receiving a time vibratory signal (X(t)) from said engine and at least one current speed of rotation N(t) of at least one shaft (11) of said engine, and
sampling means (5) for sampling in real time said time vibratory signal (X(t)) with at least one sampling signal (S) synchronised to said at least one current speed of rotation thus directly transforming the time vibratory signal (X(t)) into a corresponding synchronous vibratory signal (x(nₜ)), said synchronous vibratory signal (x(nₜ)) being a digital signal synchronised with the speed of rotation of the engine, said sampling signal (S) being parameterised by a predetermined maximum harmonic ratio *kh* and a predetermined sampling ratio r, the sampling signal (S) having a frequency *S_{f}* such that *S_{f} = r x N x kh.*

2. The system according to claim 1, **characterised in that** it includes a buffer (19) for buffering a sample consisting of a predetermined number of periods of said synchronous vibratory signal, the time length of said buffer being determined as a function of a minimum harmonic ratio.

3. The system according to claim 2, **characterised in that** it includes calculation means (15) for extracting, from said sample buffered, frequency signals (X₁, ... Xₖₕ) at harmonics multiple of the minimum harmonic and having frequencies proportional to the corresponding current speed of rotation.

4. The system according to claim 3, **characterised in that** the calculation means (15) are configured to extract said frequency signals (X₁, ... Xₖₕ) by multiplying said buffered sample with Fourier coefficients of only the harmonics to be extracted.

5. The system according to any of the previous claims, **characterised in that**:
the input means (3) are configured to receive first and second current speed of rotations (N₁(t), N₂(t)) relating to the first and second shafts of said engine respectively, and
the sampling means (5; B82, B92) are configured to directly generate first and second synchronous vibratory signals (x₁(nₜ), x₂(nₜ)) by sampling in real time said time vibratory signal (X(t)) with respectively, a first sampling signal (S1) synchronised to said first current speed of rotation, and a second sampling signal (S2) synchronised to said second current speed of rotation.

6. The system according to claim 5, **characterised in that** the sampling means (5; B232) are configured to directly generate a third synchronous vibratory signal (x₃(nₜ)) by sampling in real time said time vibratory signal with a third sampling signal (S3) synchronised to the sum or to the difference of said first and second current speed of rotations, said third sampling signal being reconstituted from a trigonometric combination of said first and second sampling signals.

7. The system according to claim 6, **characterised in that** it includes first, second, and third buffers (B10, B11, B24) for respectively buffering, a first sample consisting of a predetermined number of periods of said first synchronous vibratory signal (x₁(nₜ)), a second sample consisting of a predetermined number of periods of said second synchronous vibratory signal (x₂(nₜ)), and a third sample consisting of a predetermined number of periods of said third synchronous vibratory signal (x₃(nₜ)), and **in that** the calculation means are configured to respectively extract from said first, second and third buffered samples, first frequency signals (X₁₁, ... X₁ₖₕ) at frequencies proportional to said first current speed of rotation, second frequency signals (X₁₁, ... X₁ₖₕ) at frequencies proportional to said second current speed of rotation, and third frequency signals (X₁₁, ... X₁ₖₕ) at frequencies proportional to said sum or difference of said first and second current speed of rotations.

8. A system for monitoring a rotary engine, including the acquisition system according to any of claims 1 to 7, **characterised in that** it further includes analysis means (23) for analysing said frequency signal(s) in order to diagnose the condition of the engine.

9. A method for acquiring a vibratory signal for diagnosing a rotary engine, **characterised in that** it includes the following steps of:
receiving a time vibratory signal (X(t)) from said engine and at least one current speed of rotation N(t) of at least one shaft of said engine, and
sampling in real time said time vibratory signal with at least one sampling signal (S) synchronised to said at least one current speed of rotation directly transforming the time vibratory signal (X(t)) into a corresponding synchronous vibratory signal (x(nₜ)), said synchronous vibratory signal (x(nₜ)) thus being a digital signal synchronised with the speed of rotation of the engine, said sampling signal (S) being parameterised by a predetermined maximum harmonic ratio *kh* and a predetermined sampling ratio r, the sampling signal (S) having a frequency *S_{f}* such that *S_{f} = r x N x kh.*
